(19) Europäisches Patentamt
European Patent Office
Office européen des brevets

(11) Veröffentlichungsnummer : **0 164 661**
**B1**

(12) # EUROPÄISCHE PATENTSCHRIFT

(45) Veröffentlichungstag der Patentschrift : **13.12.89**

(51) Int. Cl.[4] : **C 07 C125/06**, C 09 D 3/00

(21) Anmeldenummer : **85106711.6**

(22) Anmeldetag : **31.05.85**

(54) **Verfahren zur Herstellung von Acylurethanen und deren Verwendung.**

(30) Priorität : **08.06.84 DE 3421293**

(43) Veröffentlichungstag der Anmeldung : **18.12.85 Patentblatt 85/51**

(45) Bekanntmachung des Hinweises auf die Patenterteilung : **13.12.89 Patentblatt 89/50**

(84) Benannte Vertragsstaaten : **AT BE CH DE FR GB IT LI NL SE**

(56) Entgegenhaltungen :
**DE-B-- 2 225 247**
**DE--C-- 1 081 460**
**HOUBEN-WEYL "Methoden der organischen Chemie"Band E 4"Kohlensäurederivate", 1983 GEORG THIEME VERLAG,Stuttgart,New York Seiten 229,232**

(73) Patentinhaber : **HOECHST AKTIENGESELLSCHAFT**
**Postfach 80 03 20**
**D-6230 Frankfurt am Main 80 (DE)**

(72) Erfinder : **Brindöpke, Gerhard, Dr.**
**Loreleistrasse 18**
**D-6230 Frankfurt am Main 80 (DE)**
**Der weitere Erfinder hat auf seine Nennug verzichtet**

**EP 0 164 661 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Es ist bekannt, Acylurethane durch Umsetzung von Carbonsäurehalogeniden mit Carbamidsäureestern herzustellen (DE-PS-1 081 460). Diese Acylurethane mit der Gruppierung —CO—NH—COOR, worin R ein Kohlenwasserstoffrest ist, werden zur Vernetzung hochmolekularer Hydroxylgruppen enthaltende Verbindungen eingesetzt. Es wird erwähnt, daß sich das Verfahren der Acylierung zur Verwendung in der Chemie der Kunststoffe, der Textilveredelung und der Lacke eignet, bzw. daß der Einsatz der vernetzten Harze als Ionenaustauscher erfolgen kann. Im Zusammenhang mit Lacken ist dort nichts Näheres angegeben ; es wird lediglich ausgeführt, daß die meisten der beschriebenen acylierten Urethane in den üblichen organischen, namentlich den in der Lackindustrie bevorzugten Lösungsmitteln löslich seien. Über die Verwendung der acylierten Urethane in Pulverlacken und/oder Pasten wird aber in der Veröffentlichung nichts gesagt, obwohl bekannt ist, daß für diesen Einsatzbereich die Komponenten eigenen Gesetzmäßigkeiten unterliegen.

Eine weitere Veröffentlichung (DE-AS-2 225 247) beschreibt die Umsetzung von Alkyl- oder Phenylcarbamaten mit Acyl- oder Arylhalogeniden von Monocarbonsäuren in Gegenwart von Metall oder Metallverbindungen, z. B. Zinkpulver oder Zinkchlorid unter Bildung von Acylurethanen, wobei Chlorwasserstoff frei wird. Über eine Verwendung der Acylurethane ist dort nichts erwähnt. Die so hergestellten Produkte haben jedoch den Nachteil der Schwerlöslichkeit bzw. Unlöslichkeit, so daß ihre Anwendung demgemäß beschränkt ist.

Es war daher erwünscht, Acylurethane nach einem Verfahren ohne Umweltbelastung herzustellen, wobei man Produkte mit erweiterter Verwendungsmöglichkeit gewinnt.

In « HOUBON-WEYL, Methoden der organischen Chemie », Bd. E4, S. 229/232 wird u. a. die Herstellung von Acylurethanen durch Reaktion von Acylimiden mit Alkoholen unter Ringöffnung beschrieben. Als Alkohole sind dabei — wie die darin zitierte Originalliteraturstelle zeigt (→ Zitat Nr. 760a ; J. Org. Chem. 45, S. 174/175 (1980)) — nur einwertige Alkohole zu verstehen. Katalysatoren für diese Reaktion kommen nicht zum Einsatz. Beim Austausch der in J. Org. Chem. 45, S. 174/175 beschriebenen einwertigen Alkohole durch mehrwertige Alkohole (z. B. Ethylenglykol) tritt auch nach ca. 8 Stunden bei Temperaturen von ca. 80 °C praktisch keine Ringöffnungsreaktion ein.

Die vorliegende Erfindung vermeidet die Nachteile der bisher bekannten Produkte, indem sie ein Verfahren zur Herstellung von Acylurethanen durch Umsetzung von Hydroxylgruppen enthaltenden Verbindungen mit Urethanen vorsieht, das dadurch gekennzeichnet ist, daß eine Hydroxyverbindung A) in Form eines mehrwertigen monomeren und/oder oligomeren Alkohols oder eines Oligomeren und/oder Polymeren aus der Gruppe Polyester, Polyacrylverbindungen, Polyepoxide, Polyether, Polythioether, Polyacetale, Polyesteramide, Phenolharze, Aminharze und ihre Modifizierungsprodukte mit polyfunktionellen Alkoholen, Polyurethane, Polysulfonamide, Celluloseester und -ether, teilweise verseifte Homo- und Copolymerisate von Vinylestern, acetalisierte Polyvinylalkohole, mit einem Urethan B) in Form eines Imids der Formel

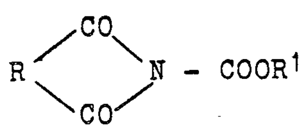

(I)

in Gegenwart eines basischen Katalysators der Gruppe tertiäre Amine und Alkaliverbindungen zu einem Acylurethan mit mindestens einer Gruppierung der Formel —CO—R—CO—NH—COOR$^1$ (II) umgesetzt wird, worin in den obigen Formeln

R den Kohlenwasserstoffrest einer gegebenenfalls α, β-ethylenisch ungesättigten, aliphatischen, cycloaliphatischen oder aromatischen Dicarbonsäure oder deren Endomethylenderivaten, mit jeweils 2 bis 10 C-Atomen,

R$^1$ Alkyl, Alkoxyalkyl mit jeweils 1 bis 16, vorzugsweise 1 bis 10 C-Atomen in der Alkylgruppe, Cycloalkyl mit 3 bis 10 C-Atomen oder Benzyl

bedeuten.

Bei der erfindungsgemäßen Reaktion erhält man eine Ringöffnung der Verbindung (I). Somit werden keine Spaltprodukte frei, vielmehr erfolgt nur eine Addition der OH-Verbindung A). Daher ist die Komponente B) an Monomere oder auch an Polymere addierbar. Infolgedessen ist eine Vielfalt des Verfahrens und der Verwendbarkeit der danach hergestellten Produkte gegeben. Da keine schädlichen Produkte abgespalten werden, gestaltet sich das erfindungsgemäße Verfahren umweltfreundlich.

Die erfindungsgemäß erhaltenen Produkte lassen sich aufgrund der vielfältigen Variationsmöglichkeiten der Ausgangsstoffe, insbesondere der Komponente A), hinsichtlich ihrer Eigenschaften und chemischen Struktur innerhalb eines breiten Bereichs variieren, so daß sie den unterschiedlichsten Verwendungsmöglichkeiten, zugänglich sind. Außerdem kann man überraschenderweise je nach Wunsch Produkte mit höherem oder geringerem Molekulargewicht bzw. mit höherer oder geringerer Löslichkeit herstellen. Auf diese Weise lassen sie sich sowohl in organischen oder wäßrigen Lösungsmitteln als auch in lösungsmittelfreien Systemen ohne Schwierigkeiten einsetzen.

Die den Rest R bildenden Säuren sind Maleinsäure, Tetra- und Hexahydropthalsäure, vorzugsweise Phthalsäure und insbesondere Bernsteinsäure.

Die Reaktion verläuft nach folgender Gleichung :

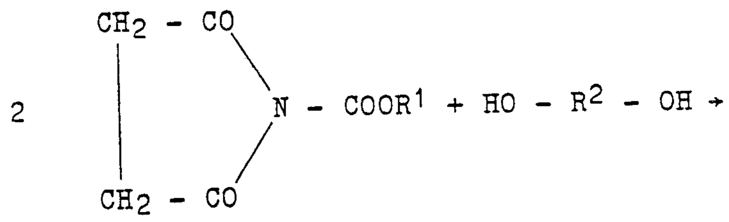

(III)

$$R^2 -(- OOC - CH_2 - CH_2 - CO -NH - COOR^1)_2 \quad \text{(IV)}$$

wobei in den obigen Formeln $R^1$ Alkyl mit 1 bis 12, vorzugsweise 1 bis 8 C-Atomen und $R^2$ einen Alkylrest mit 2 bis 10 C-Atomen bedeuten. In der Gleichung ist nur ein Diol als Komponente A) dargestellt. Es können jedoch auch ein- oder höherwertige Alkohole eingesetzt werden, wobei Verbindungen analog Formel IV, jedoch mit verschiedener Funktionalität von $R^2$ entstehen.

Als Verbindungen der Formel III werden beispielsweise genannt N-Methoxy-, -Ethoxy- und Butoxycarbonyl-succinimid und die entsprechenden Hexahydrophthalimide, N-2-Methoxyethyl-carbonylsuccinimid.

Geeignete Alkohole (Komponente A) mit dem Rest $R^2$ sind beispielsweise zwei bis sechswertige, monomere und/oder oligomere, also vorwiegend niedermolekulare, gesättigte oder α,β-ethylenisch ungesättigte aliphatische und/oder cycloaliphatische Alkohole mit 2 bis 25 C-Atomen, die gegebenenfalls Ethergruppen oder bis zu 2 Doppelbindungen oder eine Dreifachbindung enthalten. Die cycloaliphatischen Alkohole können bis zu 12, insbesondere bis zu 6 C-Atome im Ringsystem enthalten. Als Alkohole werden genannt: Ethandiol, die verschiedenen Propan-, Butan-, Pentan-, Hexan-, Octandiole, die entsprechenden Triole, sofern diese existieren, z. B. Glycerin, Hexantriol-(1,2,6), Trimethylolethan und -propan ; Neopentyglykol, Pentaerythrit, Dipentaerythrit ; Dicyclohexandiole oder -triole, z. B. Dimethylolcyclohexan ; Mannit, Sorbit, ferner die Oligomeren der genannten Diole z. B ; Di-, Tri- und Tetraethylenglykol und die analogen Propandiol- bzw. Butandiolderivate und deren höheren Homologen ; ferner Ricinusöl, jeweils einzeln oder im Gemisch.

Geeignete Komponenten A) in Form von OH-Verbindungen mit höhermolekularer Struktur sind beispielsweise Oligomere und/oder Polymere der Gruppe Polyester, Polyacrylverbindungen und Polyepoxide. Es ist aber auch möglich, als OH-Gruppen enthaltende Komponente A) Polyether, Polythioether, Polyacetale, Polyesteramide, Phenolharze, Aminharze und ihre Modifizierungsprodukte mit polyfunktionellen Alkoholen, wie Melamin-, Harnstoff-, Thioharnstoffharze ; Polyurethane, Polysulfonamide, Celluloseester und -ether, teilweise verseifte Homo- und Copolymerisate von Vinylestern, acetalisierte Polyvinylalkohole oder dergleichen einzusetzen.

Als Polyester kommen die bekannten und handelsüblichen gesättigten oder ungesättigten gegebenenfalls durch Ethergruppen und/oder monofunktionelle Komponenten, wie einwertige Alkohole, Monocarbonsäuren, modifizierte Polyester, z. B. Öl-modifizierte Polyester oder solche in Form von Alkydharzen, ferner auch Polyester mit cycloaliphatischen und/oder aromatischen Bestandteilen in Frage. Sie besitzen im allgemeinen eine Säurezahl von höchstens 15 und eine OH-Zahl von 30-200, vorzugsweise 50-150.

Als wesentliche Bestandteile der Polyester werden beispielsweise genannt :

a) aliphatische, gegebenenfalls α,β-ethylenisch ungesättigte Carbonsäuren, wie Adipinsäure, Sebacinsäure, Malein- und Fumarsäure sowie deren Anhydride, sofern diese existieren ; cyclische Polycarbonsäuren, wie Phthalsäure, deren Tetra- und Hexahydroderivate, Isophthalsäure, Terephthalsäure oder dergleichen ;

b) mehrwertige Alkohole, wie Ethylenglykol, die $C_{3-8}$-Diole, deren Oligomere, Cyclohexandiol, Glycerin, Trimethylolpropan oder dergleichen.

Geeignete Polyepoxide, die ein Epoxyäquivalentgewicht von 150 bis 5 000, vorzugsweise 200 bis 1 500 besitzen, sind beispielsweise solche auf der Basis von Diphenylolpropan oder -methan und Epichlorhydrin oder Addukte anderer Epoxide, wie Ethylenoxid, Propylenoxid, Butylenoxid, Trimethylenoxid, Styroloxid oder dergleichen an mehrwertige Alkohole, Amine oder OH-alkylierte Phenole sofern sie noch freie OH-Gruppen aufweisen, ferner Glycidylester oder -ether mit freien OH-Gruppen, deren gegebenenfalls ethylenisch ungesättigte Säurekomponente 3 bis 12 C-Atome aufweist.

Geeignete Polyacrylverbindungen sind Homo- oder Copolymerisate von Hydroxyalkylacrylat, insbesondere mit Acrylaten, mit jeweils bis zu 8 C-Atomen im Alkylrest, Acrylsäure, Acrylnitril, Acrylamid, den entsprechenden Methacrylsäureverbindungen, Styrol, Fumar- und Maleinsäureester und gegebenenfalls anderen copolymerisierbaren Monomeren oder dergleichen, jeweils einzeln oder im Gemisch. Sie besitzen im allgemeinen ein mittleres Molekulargewicht von 800 bis 20 000, vorzugsweise 1 000 bis 15 000, insbesondere 2 000 bis 12 000 und eine OH-Zahl von 50 bis 200, vorzugsweise 80 bis 160.

Die Grenzen zwischen den nieder- und höhermolekularen Komponenten A) sind jedoch fließend.

Die mit den niedermolekularen, insbesondere monomolekularen und/oder oligomeren Alkoholen erhaltenen Produkte haben in der Regel Schmelzpunkte unter 90 °C und sind zum Teil flüssig.

Die mit den höhermolekularen Komponenten A), also vor allem mit den harzartigen bzw. polymeren OH-Verbindungen hergestellten Produkte können höhere Schmelzpunkte haben. Das erfindungsgemäße Verfahren wird zweckmäßig in Gegenwart eines basischen Katalysators der Gruppe tertiäre Amine und Alkaliverbindungen, z. B. Alkoholaten wie Kalium-tert.-butylat und Natriummethylat oder aber auch Natriumhydroxid oder Kaliumhydroxid durchgeführt. Als Amine eignen sich Triethylamin, Pyridin, Dimethylaminopyridin, N-Alkylmorpholin, N-Alkylpiperidine, N-Alkyldiethanolamin, jeweils mit 1 bis 10, vorzugsweise 1 bis 5 C-Atomen in der Alkylgruppe.

Der Anteil des Katalysators kann 0,05 bis 1, vorzugsweise 0,2 bis 0,5 Gew.-%, bezogen auf den Gesamtfestkörpergehalt des Reaktionsgemisches, betragen.

Falls die OH-Gruppen enthaltende Komponente A) in Form von Aminverbindungen, wie Aminharzen oder Aminoalkoholen eingesetzt wird, kann sich gegebenenfalls die Anwesenheit eines Katalysators erübrigen.

Es ist auch möglich, die Reaktion in Gegenwart eines inerten Lösungsmittels durchzuführen z. B. Benzol, Toluol, Xylol, chlorierte Kohlenwasserstoffe, wie Methylenchlorid, Tetrachlorkohlenstoff, Chloroform, Dichlorethan, Ether wie Dimethoxyethan, Dioxan, Ester, wie Essigsäureethyl-, -methyl- oder -butylester, Ketone wie Aceton, Methylethylketon, Methylisobutylketon, jeweils einzeln oder im Gemisch. Die Ester, Kohlenwasserstoffe und Chlorkohlenwasserstoffe sind bevorzugt.

Die gegenseitigen Mengenverhältnise der Komponenten A) und B) wird man gewöhnlich im nahezu stöchiometrischen Verhältnis wählen. Bei der Umsetzung von polymeren OH-Verbindungen als Komponenten A) wird man sich in der Regel nach der Zahl der OH-Gruppen richten. Es ist aber auch möglich, nur einen Teil der freien OH-Gruppen umzusetzen, so daß die noch verbleibenden OH-Gruppen einer weiteren Vernetzungsreaktion mit den Acylurethangruppen — z. B. bei höherer Temperatur — zugänglich sind. So wird man je nach gewünschtem Produkt im allgemeinen ein Verhältnis OH-Gruppe : Acylurethan-Gruppe der Formel (I) = (0,5 bis 1,3) :1 bis 1 :(0,5 bis 1,3), vorzugsweise (0,8 bis 1) :1 bis 1 :(0,8 bis 1) wählen. Wenn die so erhaltenen Produkte praktisch nur freie Acylurethangruppen enthalten, sind sie zur Umsetzung mit weiteren Polyhydroxyverbindungen geeignet, wie dies beispielsweise in der DE-Offenlegungsschrift P 3 421 294 beschrieben ist.

Je nach den gegenseitigen Mengenverhältnissen, der Art und Menge des Lösungsmittels und Katalysators läßt sich die Reaktionstemperatur innerhalb eines weiten Bereiches variieren. Beim Arbeiten in Gegenwart eines Lösungsmittels wird man die Temperatur im allgemeinen zwischen Raumtemperatur und der beim Siedepunkt des Lösungsmittels, vorzugsweise bis 110 °C, wählen.

Falls ohne Lösungsmittel gearbeitet wird, liegt die Temperatur in der Regel zwischen Raumtemperatur und 100 °C.

Die Beendigung der je nach den Reaktionsbedingungen etwa 2 bis 12 Stunden dauernden Reaktion wird chromatographisch ermittelt. Danach wird das Lösungsmittel z. B. durch Destillation entfernt. Die gewünschten Produkte bleiben als ölige oder kristalline Verbindungen zurück und können ohne weitere Reinigung verarbeitet werden.

Die Erfindung bezieht sich auch auf die Verwendung der erfindungsgemäß hergestellten Härtungsmittel zusammen mit Polyhydroxyverbindungen zur Herstellung von Formkörpern und/oder Überzügen, vorzugsweise im Gemisch mit einem untergeordneten Anteil an Benzoin-Verbindungen, wie o-, m- oder p-Alkylbenzoinen mit bis zu 8 vorzugsweise 4 C-Atomen in der Alkylgruppe, insbesondere jedoch Benzoin selbst. Der Anteil der Benzoin-Verbindungen beträgt im allgemeinen 0,1 bis 6, vorzugsweise 0,5 bis 3 Gew.-%, bezogen auf den Gesamtkörpergehalt der Mischung.

Überraschenderweise hat es sich gezeigt, daß die erfindungsgemäßen Produkte — vor allem auch in Gegenwart der Benzoin-Verbindungen — rasch härtende hochwertige Formkörper und Überzüge mit sehr gutem Verlauf und einwandfreier Oberfläche, also ohne Wellen-, Bläschen- oder Porenbildung ergeben.

Die Komponente B) kann beispielsweise mit einem monomeren mehrwertigen Alkohol als Komponente A) unter vollständiger Reaktion der OH-Gruppen umgesetzt werden. Zur Vernetzung der dabei entstehenden Verbindung ist noch eine OH-Gruppen enthaltende Verbindung erforderlich. Dementsprechend können die so hergestellten Produkte als Härter für OH-Gruppen enthaltende Verbindungen eingesetzt werden, die sowohl nieder- als hochmolekular sein können. Geht man z. B. von einem monomeren oder niedermolekularen Alkohol als Komponente A) aus, so erhält man einen niedermolekularen Härter. Wenn dieser zur Härtung einer hochmolekularen OH-Gruppen enthaltenden Verbindung, z. B. eines Polyesters oder Acrylharzes herangezogen wird, so lassen sich durch diese Kombination die Eigenschaften der daraus entstehenden Produkte, z. B. in Form von Filmen und Formkörpern je nach dem angestrebten Verwendungszweck, z. B. als Lacke, optimieren.

Auf analoge Weise läßt sich die Imid-Komponente B) mit einem OH-Gruppen enthaltenden Polymeren A) umsetzen, so daß man einen polymeren Härter erhält, der dann z. B. zur Härtung einer monomeren Polyhydroxyverbindung dienen kann, wobei wiederum die optimale Kombination ausgewählt werden kann.

Es ist auch möglich, durch Umsetzung einer niedermolekularen Komponente A) einen niedermolekularen Härter herzustellen, der zur Härtung einer niedermolekularen Polyhydroxyverbindung eingesetzt wird. Bei dieser Kombination lassen sich beispielsweise Produkte mit hoher Vernetzungsdichte, d. h. mit hoher chemischer Beständigkeit herstellen. Andererseits kann in Einzelfällen auch ein hochmolekularer Härter zur Härtung einer oligomeren oder hochmolekularen OH-Gruppen enthaltende Verbindung dienen. Dabei ist aber nur eine geringe Vernetzungsdichte erforderlich, so daß eine relativ rasche Vernetzung erfolgt.

Eine andere Möglichkeit besteht darin, daß an Stelle des Polymeren als Komponente A) eine monomere OH-Verbindung, z. B. ein mehrwertiger Alkohol, wie Pentaerythrit, teilweise umgesetzt wird. Auch in diesem Fall erhält man analog zu der erstgenannten Ausführungsform eine einwandfreie Vernetzung des selbstvernetzenden Systems.

Bei der erfindungsgemäßen Verwendung für Überzüge werden die Acylurethane, vorzugsweise Polyacylurethane, oder deren Ausgangsstoffe mit einem Schmelzpunkt von mindestens 40, vorzugsweise mindestens 90 °C vorteilhaft in Pulverform oder in Form einer Dispersion oder Paste eingesetzt. Gewöhnlich liegt der Schmelzpunkt der erfindungsgemäß erhaltenen Produkte bei höchstens 240, vorzugsweise höchstens 180 °C. Liegt das Bindemittel hingegen in flüssiger Form vor oder hat es einen Schmelzpunkt unter 90 °C, so ist es gewöhnlich in Lösungsmitteln löslich und kann daher in Form einer Lösung als Überzug aufgebracht werden.

Es hat sich gezeigt, daß die erfindungsgemäß erhaltenen Produkte eine sichere Verarbeitung ermöglichen. Es ist auch möglich, ein Gemisch der Ausgangskomponente A) und B) — wobei überschüssige OH-Gruppen vorhanden sein müssen — und gegebenenfalls weitere für Überzüge übliche Zusatzstoffe als Überzug auf eine Unterlage aufzubringen und die erfindungsgemäße Umsetzung erst beim Einbrennen durchzuführen, wobei gleichzeitig eine Vernetzung stattfindet. Bei dieser Ausführungsform der Erfindung kann die Temperatur schon beim Vermischen der Komponenten z. B. im Extruder kurze Zeit auf mindestens 90 beispielsweise 100 bis 120 °C, ansteigen, ohne daß eine unerwünschte vorzeitige Vernetzung eintritt. Trotzdem läßt sich das so behandelte Gemisch überraschenderweise ohne Beeinträchtigung seiner Reaktionsfähigkeit bei Raumtemperatur über einen Zeitraum von mehreren Monaten, lagern. Ein Zusammenbacken tritt nicht ein, falls das Gemisch in Pulverform vorliegt.

Nach einer anderen Ausführungsform wird zunächst die erfindungsgemäße Umsetzung vorgenommen, wobei ebenfalls nur ein Teil der freien OH-Gruppen der Komponente A) umgesetzt wird. Die so erhaltenen Produkte werden dann nach an sich bekannten Verfahren weiter verarbeitet. Sie werden beispielsweise im Gemisch mit den üblichen Zusätzen für Überzüge auf die Unterlage aufgebracht und eingebrannt, wobei die noch freien OH-Gruppen mit den Acylurethangruppen unter Kettenverlängerung bzw. Selbstvernetzung reagieren. Diese Ausführungsform gestattet es, dem Reaktionsprodukt von vornherein bestimmte Eigenschaften des Polymeren zu verleihen, z. B. durch Umsetzung eines Polyepoxides als Komponente A) dem Produkt eine gute Korrosionsbeständigkeit oder dergleichen zu geben. Auch in diesem Fall sind die unvollständig umgesetzten Produkte bzw. deren Gemische bei Raumtemperatur monatelang lagerfähig, ohne daß sich eine vorherige Temperaturerhöhung beim Vermischen z. B. im Extruder nachteilig auswirkt.

Eine Ausführungsform der Erfindung sieht vor, die erfindungsgemäß erhaltenen Produkte im Gemisch mit weiteren, oben genannten Polyhydroxyverbindungen zu Formkörpern oder Überzügen weiter zu verarbeiten und die Vernetzung durch Erhitzen, z. B. unter Einbrennbedingungen, durchzuführen. Diese Ausführungsform gewährleistet ebenfalls eine sichere Verarbeitung auch bei kurzfristig erreichten Misch- bzw. Extrusionstemperaturen von 100 bis 120 °C.

Die günstigen Verlaufeigenschaften der Überzüge sind vor allem auf die Vernetzungsreaktion zwischen den OH- und Acylurethangruppen zurückzuführen. Innerhalb bestimmter Grenzen lassen sich die Verlaufeigenschaften mit der Kettenlänge der Komponente B) z. B. durch die Alkoholgruppen, steuern. Neben der ausgezeichneten Haftung der Überzüge auf der Unterlage zeigen sie noch eine gute Pigmentbenetzung, so daß noch verhältnismäßig dünne Überzüge, die noch ein ausreichendes Deckvermögen besitzen und einen einwandfreien Verlauf ergeben, hergestellt werden können. Dadurch ergibt sich eine erhebliche Materialersparnis. Andererseits sind auch unpigmentierte Überzüge, z. B. mit Pulverlacken herstellbar, deren Schichtdicke unter 30 µm, z. B. schon bei 5 µm liegt.

Da die erfindungsgemäß erhaltenen Verbindungen der Formel II und IV vorwiegend Urethangruppen enthalten, werden beim Einbrennen nur Verbindungen mit alkoholischen Gruppen frei, so daß sich dieser Vorgang besonders umweltfreundlich gestaltet. Es tritt somit weder eine Belastung der Umwelt ein, noch können sich irgendwelche schädlichen Substanzen in den Verarbeitungsvorrichtungen niederschlagen und Störungen verursachen.

Die Schichtdicke der erfindungsgemäß erhaltenen Überzüge liegt gewöhnlich bei maximal etwa 100 µm aber auch höher, vorzugsweise jedoch bei 40 bis 60 µm. Aufgrund der genannten vorteilhaften Eigenschaften der Überzugsmittel ergeben aber auch noch Schichtdicken von nur etwa 5 µm geschlossene Überzüge.

Außer den genannten Komponenten können die erfindungsgemäßen Überzugsmittel weitere übliche Zusätze, wie Katalysatoren, Pigmente, Füllstoffe, Verlaufmittel, Netzmittel oder dergleichen jeweils einzeln oder im Gemisch enthalten.

Als Verlaufmittel werden beispielsweise Polyacrylate, wie Poly-n-butylacrylat, Poly-2-ethylhexylacrylat und Celluloseacetobutyrat genannt.

Gegebenenfalls kann, um besonders niedrige Temperaturen bei der Härtung anzuwenden, mindestens ein Härtungskatalysator der Gruppe Sulfonsäuren, wie p-Toluolsulfonsäure, Naphthalin-1,4-disulfonsäure ; quartäre Ammoniumsalze, wie Tetrabutylammoniumbromid, -ammoniumchlorid, und -ammoniumjodid ; Aminohydrochloride, wie Dimethylanilinhydrochlorid, Metallsalze organischer Säuren, wie Zinknaphthenat, Cobaltnaphthenat, Dibutylzinndilaurat, Lithiumbenzoat ; Metallalkoholat, z. B. solche von Titan, Vanadium, Zirkonium sowie ihre durch Koordination der Alkoholate erhaltenen Koordinationskomplexe wie Acetylacetonat, Ethylacetoacetat u. a. ferner Alkaliverbindungen, wie Lithium-, Natrium- und Kaliumhydroxid, und Salze, wie Lithiumchlorid enthalten sein.

Diese Katalysatoren werden im allgemeinen in einem Anteil von 0,01 bis 5, vorzugsweise 0,1 bis 0,5 Gew.-%, bezogen auf Gesamtfestkörpergehalt der Mischung, eingesetzt.

Beispiele für verwendbare Pigmente sind Titandioxid, Eisenoxide und Ruß. Als Füllstoffe eignen sich unter anderem Calciumcarbonat und Bariumsulfat.

Zur Herstellung von Pulverlacken, Pasten oder Dispersionen können die erfindungsgemäß erhaltenen Acylurethane nach den für die Pulverbeschichtung oder für Dispersionen üblichen Verfahren weiterverarbeitet werden, wie sie beispielsweise im US-PS-4 383 055 und Europa Patent 0 043 104 beschrieben sind.

Je nach der gewünschten Form des Überzugsmittels, nämlich als Pulverlack, Paste oder Dispersion, wird man verschiedene Verfahren verwenden. Will man beispielsweise die Acylurethane bzw. Polyacylurethane für ein pulverförmiges Überzugsmittel verwenden, so kann man nach dem Mischen aller Komponenten das Gemisch in einem üblichen heizbaren Extruder bei kurzfristig erhöhter Temperatur, beispielsweise mit einer Massentemperatur von 100 bis 120 °C extrudieren. Das Pulverisieren erfolgt durch Mahlen. Gegebenenfalls kann die Teilchenverkleinerung bei der Herstellung von Pasten oder Dispersionen auch durch eine Naßvermahlung erfolgen, um die Temperatur möglichst niedrig zu halten. Dabei wird als flüssige Phase vorzugsweise Wasser eingesetzt.

Falls eine Dispersion hergestellt werden soll, ist darauf zu achten, daß die erfindungsgemäß hergestellten Produkte ebenso wie die übrigen Mischungskomponenten hydrophob sind, um unerwünschte Vorreaktionen zu vermeiden, die in teilweise wasserlöslichen Systemen auftreten können und zu Störungen führen. Das Überzugsmittel wird dabei im allgemeinen entweder im Wasser oder einem wasserlöslichen Bindemittel, wie Polyester oder dessen Umsetzungsprodukten mit Ölen, die z. B. Carboxylgruppen besitzen und anschließend mit Aminogruppen enthaltenden Verbindungen wasserlöslich gemacht werden können, homogenisiert. Der Festkörpergehalt einer solchen Dispersion beträgt im allgemeinen 0 bis 80, vorzugsweise 10-75 Gew.-%.

Zur Herstellung von Pulverlack oder Dispersionen wird das Mahlgut im allgemeinen gesiebt, und die Teilchen mit einer Korngröße von weniger als 120 µm abgetrennt. Die Korngröße vom Pulverlack beträgt somit bis zu 120 µm, vorzugsweise bis zu 90 µm und insbesondere 30 bis 50 µm. Bei Überzugsmitteln in Form einer Aufschlämmung liegt die Teilchengröße ebenfalls bei maximal 120 µm, vorzugsweise bei höchstens 15, insbesondere höchstens 5 µm.

Das gewonnene Pulver ist ausgezeichnet lagerfähig und klumpt selbst bei monatelanger Lagerung bei Temperaturen bis 40 °C nicht und zeigt beim Erhitzen auf 120 °C noch keinerlei Tendenz zum Vernetzen.

Das Aufbringen des Überzugsmittels z. B. in flüssiger Form auf eine Unterlage erfolgt in an sich bekannter Weise durch stromlose Auftragsverfahren, wie Spritzen, Tauchen, Fluten, Walzen (Coil-Coating) oder speziell als Pulver nach dem elektrostatischen Sprühverfahren auf Metallteile, beispielsweise auf Eisen- oder Aluminiumblech. Hierbei hat beispielsweise ein Überzugsmittel in flüssiger Form 20 bis 80, vorzugsweise 40 bis 75 Gew.-% Festkörpergehalt.

Falls die erfindungsgemäß erhaltenen Bindemittel in Form einer Dispersion als Überzüge aufgebracht werden sollen, wird man vorzugsweise entweder nach dem kataphoretischen Abscheidungsverfahren (Elektrophoretic Powder Coating) oder dem elektrostatischen Verfahren arbeiten. Bei der Elektrotauchlackierung arbeitet man gewöhnlich im wäßrigen Bad, wobei das Substrat als Kathode geschaltet ist.

Das Aufbringen der Überzugsmittel kann z. B. auf chemisch vorbehandelte bzw. entfettete, nicht grundierte oder grundierte Metalle erfolgen, ferner auch auf Glas und Keramik.

Von den genannten Auftragsverfahren sind das elektrostatische Sprühverfahren und die Elektrotauchlackierung aber auch das Walzen-(Coil-Coating) Auftragsverfahren bevorzugt.

Die Einbrenntemperatur des Überzugsmittels liegt bei 140 bis 300, vorzugsweise 150 bis 200, insbesondere 160 bis 180 °C, wobei die Temperatur abhängig ist von der Einbrenndauer. Die Temperatur ist umso höher, je kürzer die Einwirkungszeit ist und umgekehrt. Die Maximaltemperatur von 300 °C wird vor allem beim Walzverfahren (Coil-Coating) kurzzeitig erreicht, ohne daß sie sich nachteilig auf die Eigenschaften der erhaltenen Überzüge auswirkt. Auch nach diesem Verfahren erhält man einwandfreie Oberflächen. In einzelnen Fällen kann das beschichtete Werkstück auch einige Minuten auf eine Temperatur von 50 bis 100 °C vorgewärmt werden. In der Regel ist dies jedoch aufgrund der ausgezeichneten Härtungseigenschaften der erfindungsgemäßen Überzugsmittel nicht erforderlich.

Das Auftreten von nur umweltfreundlichen Spaltprodukten beim Einbrennen und die ausgezeichnete Haftung der Überzüge auf ihrer Unterlage bringen gegenüber den bisher bekannten Verfahren einen wesentlichen technischen Fortschritt mit sich.

Monoacylurethane lassen sich gegebenenfalls zusätzlich in Überzugsmitteln verwenden, um je nach Wunsch die Vernetzungsdichte herabzusetzen. Sie werden dabei jedoch nur in einem untergeordneten Anteil, d. h. bis zu 20, vorzugsweise bis zu 10 Gew.-%, bezogen auf die Polyurethane, eingesetzt. Obwohl in den meisten Fällen eine Härtung erwünscht und vorgesehen ist, ist eine solche je nach dem Verwendungszweck der erfindungsgemäßen Produkte nicht immer erforderlich, da die Eigenschaften des Überzugsmittels durch die Auswahl der OH-Gruppen enthaltenden Verbindungen und des Polycarbonsäureesters R in Formel I je nach Bedarf variiert werden können. Von dieser Variationsmöglichkeit wird man besonders bei den Monacylurethanen Gebrauch machen.

Die erfindungsgemäß erhaltenen Acylurethane finden wegen ihrer günstigen Eigenschaften vielseitige Verwendung, vor allem als Bindemittel für Überzüge auf verschiedenen Substraten wie Metall, Holz, Kunststoffen, Glas u. a., z. B. für wetterbeständige Überzüge, wie Fassadenverkleidung, für Fensterrahmen, Metallprofile, Campingmöbel, als Decklacke für Nutzfahrzeuge, wie Autos, Landmaschinen, Motorradkarosserien, für Haushaltsgeräte, wie Kühlschränke, Elektroherde oder dergleichen.

Die erfindungsgemäß erhaltenen Produkte lassen sich aufgrund ihrer großen Variationsmöglichkeiten aber auch anderweitig verwenden. Außer ihrer Verwendung für Formkörper einschließlich Folien — z. B. in Gießmassen — und/oder für Überzüge können sie auch als Bindemittel in Klebstoffen, z. B. Schmelz- oder Haftklebern, in Kitten, als Bindemittel für Schleifkörper, in Textilhilfsmitteln als Schlichte- oder Schmiermittel oder dergleichen eingesetzt werden. In diesem Fall wird man vor allem von solchen Produkten Gebrauch machen, die eine sirupöse bis höherviskose Konsistenz aufweisen. Durch eine etwaige Wechselwirkung zwischen den Acylurethangruppen und den Polyestergruppen der Textilien kann eine besonders gute Haftung erzielt werden. Darüber hinaus können die Acylurethane als Bindemittel für anorganische und organische Fasern, wie Cellulose, Holz, Glas, Steinwolle, Kunststoffasern, beispielsweise bei der Herstellung von Faservliesen, Spanplatten, zur Imprägnierung von Textilien oder dergleichen dienen.

In den nachstehenden Versuchen und Beispielen bedeuten T jeweils Gew.-Teile.

## Beispiel 1

5,97 T N-n-Butoxycarbonylsuccinimid (Komponente B) wurden in 20 ml Chloroform mit 0,9 T Ethylenglykol (Komponente A) und 0,05 T Kaliumhydroxid auf 60 °C erhitzt. Nach 5 h wurde auf 0 °C abgekühlt und der Niederschlag abgesaugt. Ausbeute 5,9 T eines weißen Pulvers, Schmelzpunkt 146 bis 148 °C.

## Beispiel 2

5,1 T N-Ethoxycarbonylsuccinimid wurden in 15 T Dimethoxyethan mit 1,6 T Diethylenglykol und mit 0,03 T Kalium-t-butylat 6 h lang zum Rückfluß erhitzt, nach Abkühlung auf Raumtemperatur der Niederschlag abgesaugt und getrocknet. Ausbeute 4,3 T eines weißen Pulvers vom Schmelzpunkt 126 bis 138 °C.

## Beispiel 3

103 T N-Ethoxycarbonylsuccinimid wurden in 300 T Dimethoxyethan mit 0,5 T Triethylamin und 27 T 1.1.1-Tris-hydroxymethylpropan auf 80 °C erwärmt. Nach 12 h wurde bei 50 °C das Lösungsmittel unter vermindertem Druck abdestilliert. Es verblieben 128 T eines zähen Oels.

## Beispiel 4

3,5 T N-i-Propylcarbonylsuccinimid wurden 0,6 T Ethylenglykol und 0,2 T Triethylamin auf 100 °C erhitzt. Nach 8 h wurde auf Raumtemperatur abgekühlt und mit 50 T Ether ausgerührt. Der Niederschlag wurde abgesaugt und getrocknet. Ausbeute 3,4 T kristallines Produkt vom Schmelzpunkt 76 °C.

Die nach den Beispielen 1 bis 4 erhaltenen Produkte eignen sich als Härter für jede OH-Gruppen enthaltende Verbindung, die sowohl in fester als auch in flüssiger Form vorliegen kann, beispielsweise für Polyester, Acrylharze oder dergleichen. Auf diese Weise lassen sich solche Harz-Härter-Kombinationen zur Herstellung von Formkörpern — z. B. auch aus Gießmassen — oder Überzügen verwenden.

## Vergleichssubstanz V

Als Vergleichssubstanz diente ein handelsübliches, mit ε-Caprolactam verkapptes Isophorondiisocyanat, Schmelzpunkt 90 bis 110 °C, verkappte Isocyanatgruppen 14 %, freie Isocyanatgruppen 0,5 %.

Verwendung der erfindungsgemäß erhaltenen Produkte für Überzüge

Die gemäß Beispielen 1 und 2 erhaltenen Produkte sowie die Vergleichssubstanz V wurden zusammen mit dem OH-Gruppen enthaltenden Polyester I als Härter zur Herstellung von Überzügen eingesetzt. Der hier verwendete Polyester I war ein Gemisch eines ölfreien, gesättigten, Hydroxylgruppen enthaltenden Polyesters mit einer OH-Zahl von 50, bekannt unter der Handelsbezeichnung « Alftalat(R) AN 739 » = Komponente A1, und eines gesättigten, Hydroxylgruppen enthaltenden Polyesters mit einer OH-Zahl von 110, bekannt unter der Handelsbezeichnung « Alftalat(R) VAN 1242 » = Komponente A2.

Polyester I — OH-Zahl 70

Tabelle 1 gibt einen Überblick über die Mengenverhältnisse der erfindungsgemäß nach Beispielen 1 und 2 hergestellten Polyacylurethane, der Vergleichssubstanz V, des Polyesters sowie über die sonstigen Zusätze bei deren Verwendung als Überzüge.

Tabelle 1

| Beispiel | 1 | 2 | V |
|---|---|---|---|
| Titandioxid | 300 | 300 | 300 |
| Verlaufmittel (Polyacrylat) | 30 | 30 | 30 |
| Benzoin | 5 | 5 | 5 |
| Härter Beispiel 1 | 149 | - | - |
| Härter Beispiel 2 | - | 146 | - |
| Vergleichssubstanz V | - | - | 181 |
| Komponente A1 | 355 | 357 | 323 |
| Komponente A2 | 162 | 162 | 161 |
| Polyester I* | 517 | 519 | 484 |

* Die Zahlenwerte des Polyesters entsprechen der Summe aus den beiden zuvor genannten Alftalat-Typen.

Lacktechnische Prüfung

Tabellen 2 und 3 zeigen die physikalischen Werte der Überzüge nach Tabelle 1 unter verschiedenen Einbrennbedingungen. Die Werte gemäß Tabelle 2 wurden nach 20 min Härtung bei 170 °C und diejenigen von Tabelle 3 nach einer Härtung von 15 min bei 180 °C gewonnen. Die Schlagprüfung erfolgte nach ASTM D 2794-69. Die Werte für den Verlauf wurden durch visuelle Prüfung ermittelt, wobei 0 = bester Wert und 5 = schlechtester Wert bedeuten (DIN 53230).

Tabelle 2

Härtung 20 min/170 °C (Eisenblech, zinkphosphatiert)

| Beispiel | 1 | 2 | V |
|---|---|---|---|
| Erichsentiefung mm | 12,3 | 11 | 10 |
| Schlagprüfung (Reverse) | | | |
| inch. pound | $>$100 | $>$100 | $<$20 |
| Schichtdicke µm | 50 | 45 | 55 |
| Glanz nach Lange (60°) | 102 | 101 | 92 |
| Verlauf | 1,5 | 1 | 2,5 |

(Siehe Tabelle 3 Seite 9 f.)

Tabelle 3

Härtung 15 min/180 °C (Eisenblech, zinkphosphatiert)

| Beispiel | 1 | 2 | V |
|---|---|---|---|
| Erichsentiefung mm | 11,5 | 11,6 | 10,8 |
| Schlagprüfung (Reverse) | | | |
| inch. pound | >100 | >100 | 48 |
| Schichtdicke µm | 50 | 55 | 55 |
| Glanz nach Lange (60°) | 101 | 100 | 92 |
| Verlauf | 2 | 1,5 | 2,5 |

Beispiel 5a

Herstellung eines Epoxid-Aminadduktes (Komponente A)

683 T eines Epoxidharzes aus Diphenylolpropan (Bisphenol A) und Epichlorhydrin mit einem Epoxiäquivalentgewicht von 480 wurden in 339 T Dimethyldiglykolether aufgelöst und auf 80 °C erhitzt. Anschließend wurden 50,4 T Diethanolamin und 57,8 T Diisopropylaminoethylamin gleichzeitig zugetropft und die Reaktionsmischung 3 Stunden bei 80 °C gehalten. Man erhielt eine klare bernsteinfarbene Harzlösung.

Beispiel 5b

300 T obiger Harzlösung 5a wurden bei Raumtemperatur mit 31 T N-Ethoxycarbonylsuccinimid versetzt, binnen 30 min auf 40 °C erhitzt und anschließend 2 h bei 60 °C nachgerührt. Nach Abkühlung auf Raumtemperatur wurden 1,7 T Bleioctoat zugegeben. Man erhielt eine klare bernsteinfarbene Harzlösung, in der die Imidgruppen des Festkörperanteils nur teilverestert sind und der noch freie OH-Gruppen enthält.

Das nach Beispiel 5 erhaltene Produkt kann auch zur Herstellung einer Grundierung durch kataphoretische Abscheidung dienen. Hierfür wird die erhaltene Harzlösung unter Zusatz einer schwachen Säure, wie Essigsäure, in Wasser gelöst und anschließend die Kataphorese durchgeführt.

Vergleich 5 V

31 T Toluylendiisocyanat wurden in 24 T Diethylenglykoldimethylether gelöst, mit 0,3 T Zinkacetylacetonat versetzt und anschließend binnen 2 h bei 40 °C 23 T 2-Ethylhexanol zugetropft. Bei Raumtemperatur wurde bis zu einem N=C=O-Wert von 2,5 % nachgerührt. Das so hergestellte halbverkappte Isocyanat wurde bei 40 °C zu 300 T der obigen Harzlösung 5a getropft und so lange bei 40 °C gehalten, bis ein N=C=O-Wert von 0,2 % erreicht wurde. Anschließend wurden 2,6 T Bleioctoat zugesetzt. Man erhielt eine klare bernsteinfarbene Lösung.

Verwendung der Produkte nach Beispiel 5b und Vergleich 5 V für Überzüge

Die Harzlösung der Beispiele 5b und 5 V wurden mit Ethylenglykolmonoethylether auf ca. 50 % verdünnt und als Naßfilm von 200 µm Stärke auf zinkphosphatierte Eisenbleche gerakelt. Anschließend wurde der Überzug bei 150 bis 180 °C eingebrannt.

Lacktechnische Prüfung

Die Ergebnisse der lacktechnischen Prüfung der bei unterschiedlichen Temperaturen eingebrannten Überzüge sind aus Tabelle 4 ersichtlich.

(Siehe Tabelle 4 Seite 10 f.)

Tabelle 4

| Einbrennbedingungen | 150°C/ 20 min | | 160°C/ 20 min | | 180°C/ 20 min | |
|---|---|---|---|---|---|---|
| Beispiel bzw. Vergleich | 5b | 5V | 5b | 5V | 5b | 5V |
| Erichsentiefung | 9,9 | 9,0 | 9,7 | 9,7 | 9,5 | 9,3 |
| Schlagprüfung (Reverse) inch. pound | >160 | 48 | >160 | 100 | >160 | 140 |
| Methylethylketontest (Doppelwischungen mit 1 kg Auflagegewicht) | >100 | 30 | >100 | 50 | >100 | >100 |

Diskussion der Ergebnisse

Zu Tabelle 2 und 3

Wie aus den Werten für die Erichsentiefung und Schlagprüfung ersichtlich ist, tritt die Vernetzung bei den erfindungsgemäß erhaltenen Proben relativ früh ein, das heißt, die erforderlichen mechanischen Eigenschaften werden überraschenderweise bei verhältnismäßig niedriger Temperatur innerhalb kurzer Einbrennzeiten erreicht. Vor allem zeigt sich der Vorteil der Erfindung im Hinblick auf den Vergleichsversuch V, bei dem besonders der Wert für die Schlagprüfung erheblich unterhalb denjenigen der Beispiele 1 und 2 liegt. Außerdem zeigen die erfindungsgemäß erhaltenen Produkte auch einen besseren Glanz und Verlauf als die Vergleichsprodukte.

Zu Tabelle 4

Auch die unter Einsatz der Harzlösung gemäß Beispiel 5b erhaltenen Überzüge zeigen schon bei niedrigen Temperaturen ausgezeichnete mechanische Eigenschaften sowie eine gute Chemikalienbeständigkeit (Methylethylketontest), die von den Vergleichsproben nicht erreicht werden, wie aus den Werten bei 150 und 160 °C Einbrenntemperatur hervorgeht. So wird eine etwa entsprechende Vernetzung beim Vergleichsversuch erst bei einer Temperatur von 180 °C erreicht. Darüber hinaus weisen alle erfindungsgemäßen Produkte eine ausgezeichnete Lagerbeständigkeit über Wochen und Monate auf.

**Patentansprüche**

1. Verfahren zur Herstellung von Acylurethanen durch Umsetzung von Hydroxylgruppen enthaltenden Verbindungen mit Urethanen, dadurch gekennzeichnet, daß eine Hydroxyverbindung A) in Form eines mehrwertigen monomeren und/oder oligomeren Alkohols oder eines Oligomeren und/oder Polymeren aus der Gruppe Polyester, Polyacrylverbindungen, Polyepoxide, Polyether, Polythioether, Polyacetale, Polyesteramide, Phenolharze, Aminharze und ihre Modifizierungsprodukte mit polyfunktionellen Alkoholen, Polyurethane, Polysufonamide, Celluloseester und -ether, teilweise verseifte Homo- und Copolymerisate von Vinylestern, acetalisierte Polyvinylalkohole, mit einem Urethan B) in Form eines Imids der Formel

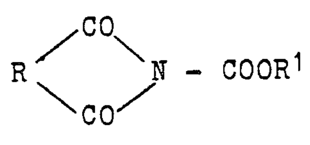

(I)

in Gegenwart eines basischen Katalysators der Gruppe tertiäre Amine und Alkaliverbindungen zu einem Acylurethan mit mindestens einer Gruppierung der Formel —CO—R—CO—NH—$COOR^1$ (II) umgesetzt wird, worin in den obigen Formeln

R den Kohlenwasserstoffrest einer gegebenenfalls α,β-ethylenisch ungesättigten, aliphatischen, cycloaliphatischen oder aromatischen DIcarbonsäure oder deren Endomethylenderivaten, mit jeweils 2 bis 10 C-Atomen,

$R^1$ Alkyl, Alkoxyalkyl mit jeweils 1 bis 16, vorzugsweise 1 bis 10 C-Atomen in der Alkylgruppe, Cycloalkyl mit 3 bis 10 C-Atomen oder Benzyl

bedeuten.

2. Verfahren nach Anspruch 1, dadurch gekennzeichnet, daß die Umsetzung der Komponente B) mit einer OH-Gruppen enthaltenden Komponente A) so geführt wird, daß nur ein Teil der OH-Gruppen der Komponente A) umgesetzt wird.

3. Verfahren nach Anspruch 1 oder 2, dadurch gekennzeichnet, daß als Komponente A) ein Oligomeres und/oder Polymeres der Gruppe Polyester, Polyacrylverbindungen und Polyepoxide eingesetzt wird.

4. Verfahren nach einem oder mehreren der Ansprüche 1 bis 3, dadurch gekennzeichnet, daß als Komponente A) ein Polyester mit einer OH-Zahl von 30 bis 200, vorzugsweise 50 bis 150, ein Epoxidharz mit einem Epoxyäquivalentgewicht von 150 bis 5.000, vorzugsweise 200 bis 1.500 oder eine Polyacrylverbindung mit einem mittleren Molekulargewicht von 800 bis 20.000, insbesondere 2.000 bis 212.000 und einer OH-Zahl von 50 bis 200, vorzugsweise 80 bis 160, eingesetzt wird.

5. Verfahren nach einem oder mehreren der Ansprüche 1 bis 4, dadurch gekennzeichnet, daß das Verhältnis der OH-Gruppen der Komponente A) zu den Acylurethangruppen der Komponente B) (0,5 bis 1,3) :1 bis 1 :(0,5 bis 1,3), vorzugsweise (0,8 bis 1) :1 bis 1 :(0,8 bis 1) beträgt.

6. Verfahren nach einem oder mehreren der Ansprüche 1 bis 5, dadurch gekennzeichnet, daß der Anteil des Katalysators 0,05 bis 1, vorzugsweise 0,2 bis 0,5 Gew.-%, bezogen auf den Gesamtfestkörpergehalt des Reaktionsgemisches, beträgt.

7. Verfahren nach einem oder mehreren der Ansprüche 1 bis 6, dadurch gekennzeichnet, daß die Komponente B) in Form einer Verbindung der Formel

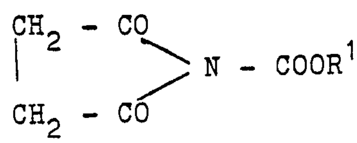

(III)

worin $R^1$ Alkyl mit 1 bis 12 C-Atomen bedeutet, mit der Komponente A) in Form eines Diols zu einem Produkt der Formel

$$R^2{-}(OOC{-}CH_2{-}CH_2{-}CO{-}NH{-}COOR^1)_2 \quad (IV)$$

umgesetzt wird, worin $R^1$ die obige Bedeutung hat und $R^2$ einen Alkylenrest mit 2 bis 10 C-Atomen bedeutet.

8. Verwendung der nach dem Verfahren gemäß einem oder mehreren der Ansprüche 1 bis 7 hergestellten Acylurethane als selbstvernetzende Härtungsmittel oder als Härtungsmittel für Polyhydroxyverbindungen.

9. Verwendung nach Anspruch 8 zur Herstellung von Formkörpern und/oder Überzügen.

10. Verwendung nach Anspruch 8 und/oder 9, dadurch gekennzeichnet, daß das Acylurethan zusammen mit Benzoin und/oder dessen o-, m- oder p-Alkylsubstitutionsprodukten eingesetzt wird.

11. Überzugsmittel auf Basis der nach dem Verfahren gemäß einem oder mehreren der Ansprüche 1 bis 7 hergestellten Acylurethane, gegebenenfalls Polyhydroxyverbindungen und weiteren üblichen Zusätzen.

12. Überzugsmittel nach Anspruch 11, dadurch gekennzeichnet, daß als weitere Zusätze Katalysatoren, Pigmente, Füllstoffe, Verlaufmittel und/oder Netzmittel enthalten sind.

13. Überzugsmittel nach Anspruch 11 und/oder 12 in Pulverform, als Paste, Dispersion oder Lösung.

## Claims

1. A process for the preparation of an acylurethane by reacting compounds containing hydroxyl groups with urethanes, which comprises reacting a hydroxy compound A) in the form of a polyhydric monomeric and/or oligomeric alcohol or of an oligomer and/or polymer belonging to the group comprising polyesters, polyacrylic compounds, polyepoxides, polyethers, polythioethers, polyacetals, polyester-amides, phenolic resins, amine resins and their modification products with polyfunctional alcohols, polyurethanes, polysulfonamides, cellulose esters and cellulose ethers, partially saponified homopolymers and copolymers of vinyl esters and acetalised polyvinyl alcohols with a urethane B) in the form of an imide of the formula

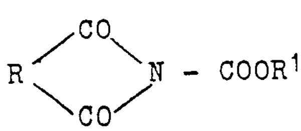

(I)

in the presence of a basic catalyst belonging to the group comprising tertiary amines and alkali compounds to give an acylurethane containing at least one grouping of the formula $-CO-R-CO-NH-COOR^1$ (II), in which formulae

R denotes the hydrocarbon radical of an optionally α,β-ethylenically unsaturated, aliphatic, cycloaliphatic or aromatic dicarboxylic acid or endomethylene derivatives thereof, in each case having 2 to 10 carbon atoms, and

$R^1$ denotes alkyl or alkoxyalkyl having in each case 1 to 16, preferably 1 to 10, carbon atoms in the alkyl group, cycloalkyl having 3 to 10 carbon atoms or benzyl.

2. The process as claimed in claim 1, wherein the reaction of the component B) with a component A) containing OH groups is carried out in such a way that only a fraction of the OH groups in the component A) is reacted.

3. The process as claimed in claim 1 or 2, wherein the component A) employed is an oligomer and/or polymer belonging to the group comprising polyesters, polyacrylic compounds and polyepoxides.

4. The process as claimed in any of claims 1 to 3, wherein the component A) employed is a polyester having an OH number of 30 to 200, preferably 50 to 150, an epoxy resin having an epoxy equivalent weight of 150 to 5,000, preferably 200 to 1,500, or a polyacrylic compound having an average molecular weight of 800 to 20,000, in particular 2,000 to 212,000, and an OH number of 50 to 200, preferably 80 to 160.

5. The process as claimed in any of claims 1 to 4, wherein the ratio of the OH groups in the component A) to the acylurethane groups in the component B) is (0.5 to 1.3) :1 to 1 :(0.5 to 1.3), preferably (0.8 to 1) :1 to 1 :(0.8 to 1).

6. The process as claimed in any of claims 1 to 5, wherein the proportion of the catalyst is 0.05 to 1, preferably 0.2 to 0.5, % by weight, relative to the total solids content of the reaction mixture.

7. The process as claimed in any of claims 1 to 6, wherein the component B) is reacted in the form of a compound of the formula

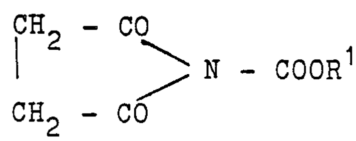

(III)

in which $R^1$ denotes alkyl having 1 to 12 carbon atoms, with the component A) in the form of a diol to give a product of the formula

$$R^2\text{—}(OOC\text{—}CH_2\text{—}CH_2\text{—}CO\text{—}NH\text{—}COOR^1)_2 \quad (IV)$$

in which $R^1$ has the above meaning and $R^2$ denotes an alkylene radical having 2 to 10 carbon atoms.

8. The use of the acylurethanes prepared by the process according to any of claims 1 to 7 as self-crosslinking curing agents or as curing agents for polyhydroxy compounds.

9. The use as claimed in claim 8 for the production of shaped articles and/or coatings.

10. The use as claimed in claim 8 or 9, wherein the acylurethane is employed together with benzoin and/or o-, m- or p-alkyl substitution products thereof.

11. A coating agent based on acylurethanes prepared by the process as claimed in any of claims 1 to 7, if appropriate, polyhydroxy compounds and further customary additives.

12. A coating agent as claimed in claim 11, wherein catalysts, pigments, fillers, leveling agents and/or wetting agents are present as further additives.

13. A coating agent as claimed in claim 11 and/or 12, in the form of powder or as a paste, dispersion or solution.

## Revendications

1. Procédé pour préparer des acyluréthannes par réaction de composés contenant des groupes hydroxyles avec des uréthannes, caractérisé en ce qu'on fait réagir un composé hydroxylé A), sous forme d'un polyalcool monomère et/ou oligomère ou d'un oligomère et/ou polymère choisi dans l'ensemble constitué par un polyester, des composés polyacryliques, des polyépoxydes, des polyéthers, des polythioéthers, des polyacétals, des polyesteramides, des résines phénoliques, des résines d'amines et leurs produits de modification avec des alcools polyfonctionnels, des polyuréthannes, des polysulfamides, des esters et éthers de la cellulose, des homopolymères et des copolymères partiellement saponifiés d'esters vinyliques, des poly(alcools vinyliques) acétalisés, avec un uréthanne B) sous forme d'un imide de formule

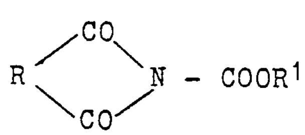

(I)

en présence d'un catalyseur basique choisi parmi des amines tertiaires et des composés alcalins, pour obtenir un acyluréthanne comportant au moins un groupement de formule $\text{—}CO\text{—}R\text{—}CO\text{—}NH\text{—}COOR^1$ (II), et, dans les formules ci-dessus :

R représente le reste hydrocarboné d'un acide dicarboxylique aliphatique, cycloaliphatique ou aromatique, présentant éventuellement de l'insaturation éthylénique en α,β ou de ses dérivés endométhyléniques, comportant à chaque fois 2 à 10 atomes de carbone,

$R^1$ représente un groupe alkyle, alcoxyalkyle ayant chacun 1 à 16, avantageusement 1 à 10, atomes de carbone dans le groupe alkyle, un groupe cycloalkyle ayant 3 à 10 atomes de carbone ou un groupe benzyle.

2. Procédé selon la revendication 1, caractérisé en ce qu'on conduit la réaction du composant B) avec un composant A) contenant des groupes OH, de manière à ne faire réagir qu'une partie des groupes OH du composant A).

3. Procédé selon la revendication 1 ou 2, caractérisé en ce qu'on utilise comme composant A) un oligomère et/ou un polymère choisi parmi un polyester, des composés polyacryliques et des polyépoxydes.

4. Procédé selon une ou plusieurs des revendications 1 à 3, caractérisé en ce qu'on utilise comme composant A) un polyester ayant un indice d'acide de 30 à 200, avantageusement 50 à 150, une résine époxyde ayant un poids d'équivalent d'époxyde de 150 à 5 000, avantageusement de 200 à 1 500 ou un composé acrylique ayant un poids moléculaire moyen de 800 à 20 000, en particulier de 2 000 à 12 000 et ayant un indice de OH de 50 à 200, avantageusement de 80 à 160.

5. Procédé selon une ou plusieurs des revendications 1 à 4, caractérisé en ce que le rapport des groupes OH du composant A) aux groupes acyluréthannes du composant B) va de (0,5 à 1,3) :1 jusqu'à 1 :(0,5 à 1,3), avantageusement de (0,8 à 1) :1 à 1 :(0,8 à 1).

6. Procédé selon une ou plusieurs des revendications 1 à 5, caractérisé en ce que la proportion du catalyseur représente 0,05 à 1, avantageusement 0,2 à 0,5 % en poids, sur la base de la teneur totale en solides du mélange réactionnel.

7. Procédé selon une ou plusieurs des revendications 1 à 6, caractérisé en ce que l'on fait réagir le composant B) sous forme d'un composé de formule

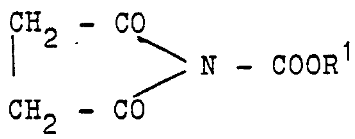
(III)

dans laquelle $R^1$ représente un groupe alkyle ayant 1 à 12 atomes de carbone, avec le composant A) sous forme d'un diol pour obtenir un produit de formule

$$R^2\text{—}(OOC\text{—}CH_2\text{—}CH_2\text{—}CO\text{—}NH\text{—}COOR^1)_2 \qquad (IV)$$

dans laquelle $R^1$ a le sens ci-dessus et $R^2$ représente un reste alkylène ayant 2 à 10 atomes de carbone.

8. Utilisation des acyluréthannes, préparés selon le procédé correspondant à une ou plusieurs des revendications 1 à 7, comme durcisseur autoréticulable ou comme durcisseur pour des composés polyhydroxylés.

9. Utilisation selon la revendication 8 pour préparer des objets façonnés ou moulés et/ou des revêtements.

10. Utilisation selon la revendication 8 et/ou 9, caractérisé en ce qu'on utilise l'acyluréthanne avec de la benzoïne et/ou ses produits de substitution par un groupe alkyle en ortho, méta ou para.

11. Produit de revêtement à base des acyluréthannes préparés d'après le procédé selon une ou plusieurs des revendications 1 à 7, éventuellement de composés produits hydroxylés et d'autres additifs usuels.

12. Produit pour revêtement selon la revendication 11, caractérisé en ce qu'il contient comme autre additif des catalyseurs, des pigments, des charges, des agents de fluidité ou d'étalement et/ou des mouillants.

13. Produit de revêtement selon la revendication 11 et/ou 12, sous forme de poudre, sous forme de pâte, de dispersion ou de solution.